# EUROPEAN PATENT APPLICATION

(11) **EP 4 389 066 A1**
(43) Date of publication of application: **26.06.2024**
(21) Application number: 22214803.3
(22) Date of filing: 20.12.2022
(51) Int. Cl.: A61C 19/04, A61C 7/08, A61C 17/22, A63B 71/08

(54) **SYSTEME FOR ASSESSING THE FIT OF AN ORAL APPLIANCE BEING WORN BY A SUBJECT**

(71) Applicant: Koninklijke Philips N.V., 5656 AG Eindhoven (NL)
(72) Inventor: KOOIJMAN, Gerben, Eindhoven (NL); PANDE, Nakul, Eindhoven (NL); GERHARDT, Lutz Christian, Eindhoven (NL); JOHNSON, Mark Thomas, Eindhoven (NL)
(74) Representative: Philips Intellectual Property & Standards

(57) **Abstract**

Proposed are schemes, solutions, concepts, designs, methods and systems pertaining to aiding assessment of the fit of an oral appliance for a subject (i.e. user). Embodiments proposed assessing fit based on the mechanical response of the oral appliance to a mechanical stimulus applied to the oral appliance. In this way, an indication or measure of fit of the oral appliance to the subject may be obtained.

## Description

### FIELD OF THE INVENTION

The present invention relates to the field of oral appliances, and in particular to assessing the fit of an oral appliance worn by a subject.

### BACKGROUND OF THE INVENTION

It is known to provide oral appliances, such as mouthguards, dental aligners, orthodontic care devices and the like, to be placed in the mouth of a subject (i.e. user) during use. Such appliances typically require a good fit (e.g. close alignment or matching geometry) with the subject's teeth and/or gums.

It is also known that many users fail to wear or use oral appliances as directed. Despite this, the timing of changing from a first aligner of orthodontic device to second, different device is typically based on a fixed schedule provided by a dental practitioner using remote planning or remote analysis of images. Treatment progress therefore relies on subjective assessment by a dental practitioner or is entirely independent of actual wear/usage by the user. A systematic (i.e. objective) manner of assessing the fit of an oral appliance worn by a subject is therefore desired.

Further, the fit of an oral appliance to a subject may change over time, e.g. due to deformation of the appliance and/or alteration in the position(s) of a subject's teeth. Indeed, an oral appliance such as dental aligner may be specifically designed and used to change the position of a subject's teeth. Thus, wearing of a dental aligner will cause a subject's teeth position to change, thus altering the fit of the dental aligner to the subject's teeth over time.

### SUMMARY OF THE INVENTION

The invention is defined by the claims.

According to examples in accordance with an aspect of the invention, there is provided a system for assessing the fit of an oral appliance being worn by a subject, the system comprising:
a sensor unit configured to measure a mechanical response of the oral appliance to a mechanical stimulus applied to the oral appliance; and
a processor arrangement configured to analyze the measured mechanical response to determine a fit value describing the fit of the oral appliance to the subject.

Proposed concepts thus aim to provide schemes, solutions, concepts, designs, methods and systems pertaining to aiding assessment of the fit of an oral appliance for a subject (i.e. user). Embodiments of the invention propose assessing fit based on the mechanical response of the oral appliance to a mechanical stimulus applied to the oral appliance. For example, by analyzing a frequency response of the oral appliance after striking it with an impulse force, it may be determined if the oral appliance is tightly/closely fitted to the users teeth and/or gums, or loosely fitted. In this way, an indication or measure of fit of the oral appliance to the subject may be obtained.

Embodiments may therefore address the issue of evaluating the fit of an oral appliance (e.g. dental aligner, orthodontic device and the like) by employing measurement of mechanical vibration response to a mechanical stimulus applied to the appliance. This provides objective feedback on fit, which may then be used to provide guidance on when to change the oral appliance for example. Such provision of an objective fit evaluation may also help to improve or optimize dental treatment, e.g. by enabling a treatment/wear plan to be monitored for compliance and/or be dynamically adapted to actual wear/usage by the user.

It is proposed that force between an oral appliance and wearer's teeth may be leveraged a measure of fit, e.g. higher force = tighter fit). This force will influence a mechanical response of the oral appliance to a mechanical stimulus applied to the oral appliance. By measuring the mechanical response to a stimulus, fit can be assessed. Further, by tracking/monitoring the mechanical response over time, the change in fit of the oral appliance can be assessed. Means for measuring the mechanical response and/or means for generating the stimulus can be provided in/on the oral appliance itself or provided externally to the oral appliance, e.g. by a power toothbrush (using the back side of toothbrush platen for instance).

It is proposed that an oral appliance will exhibit a certain response to an applied mechanical stimulus, and this response may vary depending on how much it is in contact with, or pressing against, a wearer's teeth and/or gums. In general form, this response is expressed in either the frequency domain, i.e. the frequency response, or in the time domain, i.e. the impulse response. Both may be characterized by several features, for instance:
- For frequency response: (one or more) resonance frequencies, quality factor of resonant peaks; and
- For impulse response: maximum amplitude, decay time.

A principle of the proposed invention a static force (e.g. pre-load) between and oral appliance (e.g. aligner) and a wearer's teeth/gums affects the oral appliance's mechanical response to a stimulus. In particular, it has been observed that this occurs through non-linearity in the system, for instance:
- For a vibrating toothbrush, the effective moving mass and/or motion resistance, and/or (gum) compliance depends on the static tooth displacement rather than being constant. On its turn, the static tooth displacement is dependent on the appliance-tooth pre-load;
- Contact between oral appliance and teeth throughout a vibration cycle depends on the pre-load. In particular, the possibility of momentary loss of contact between the oral appliance and the teeth (i.e. disengagement) significantly affects the vibrational response of the oral appliance. For this case, simulation results are presented below.

Based on the above realization(s), it is proposed to determine a change in oral appliance fit to wearer by measuring a change in response of the oral appliance to a stimulus (such as a vibratory force, for example).

Embodiments may therefore provide the advantage that the fit of an oral appliance to a subject can be objectively assessed, and thus determined in an accurate and/or consistent manner. For example, embodiments may enable the fit of dental aligner to a wearer to be accurately assessed. Further, such assessment may be repeated at regular intervals over an extended period of time (e.g. daily over the course of one or more months) to monitor the fit in a consistent manner, and thus infer a degree of movement of the wearer's teeth caused by the dental aligner (e.g. from a detected change in the fit of the aligner).

In other words, embodiments propose to a determine fit of an oral appliance worn by a subject. The determined fit may aid oral care/treatment decision making. Accordingly, embodiments may be used in relation to oral care/treatment selection so as support a user when selecting an oral care/treatment regime.

For instance, embodiments may provide the mean to assess dental aligner fit remotely in an objective and non-obtrusive way by being seamlessly integrated in an aligner wearing workflow (e.g. without needing the user/wearer to take images). Such embodiments may also provide an objective recommendation to change aligner (or wear the aligner for longer), thus facilitating dynamic adjustment of treatment (which may lead to improved treatment success and enhance consumer satisfaction).

It will therefore be understood that the proposed concept(s) may instead be employed in a wide range of oral hygiene products/appliances that are positioned against the teeth and/or gums of a subject during use.

The sensor unit may comprise a movement sensor configured to measure at least one of an amplitude and a frequency of at least one portion of the dental aligner. By way of example, the movement sensor may comprise at least one of: a gyroscope; an accelerometer; a magnetometer; and an inertial measurement unit (IMU). Embodiments may therefore leverage one or more widely available sensors, thus supporting simple and cost-effective implementation of the proposed concept(s).

In some embodiments, the sensor unit may comprise at least one of: an accelerometer; a gyroscope; an inertial measurement unit IMU; and piezo transducer circuit configured to convert a change of a parameter of at least one portion of the oral appliance to an electrical signal. The processor arrangement may then be configured to convert the electrical into a fit value. Accurate measurement of the oral appliance's mechanical response may therefore be realized with small and cost-effective arrangement. This may also support integration into the oral appliance and the provision of a signal that can be communicated and processed easily.

In an embodiment, the oral appliance may comprise the sensor unit. The oral appliance may then be remotely located from the processor arrangement, and the system may further comprise a communication unit configured to communicate the measured mechanical response to the processor arrangement. That is, embodiment may facilitate the provision of the sensor unit in or on the oral appliance, whilst enabling the processor arrangement to be separate from the oral appliance (e.g. within a smartphone, tablet computer or the cloud).

In an embodiment, the sensor unit may be further configured to detect application of mechanical stimulus to the oral appliance. Responsive to detecting application of mechanical stimulus to the oral appliance the sensor unit may be configured to measure the mechanical response of the oral appliance to the detected mechanical stimulus. In this way, the process of measuring and analyzing a mechanical response of the oral appliance may be limited to relevant/appropriates times, thus reducing power consumption and/or avoiding the determination of incorrect/irrelevant fit values.

Some embodiments may further comprise: an output interface configured to output an instruction for prompting the subject to provide the mechanical stimulus to the oral appliance. The instruction may, for example, comprise guidance instructing the subject to perform a predetermined jaw movement or pose. By instructing/guiding the subject, such embodiments may help to ensure that measurements of the mechanical response are consistent and accurate, for example. For instance, an instructed pose may require the subject to open his/her mouth wide, reducing contact of the oral appliance with the user's cheeks and/or tongue.

The system may further comprise a stimulation unit configured to generate and apply the mechanical stimulus to the oral appliance. Embodiments may therefore incorporate the means for generating and applying the mechanical stimulus to the oral appliance. This may avoid the need for a separate device to be used and/or ensure that the mechanical stimulus is applied in an accurate, consistent, and controlled manner.

For instance, the stimulation unit may comprise at least one of: a piezoelectric transducer adapted to apply a force to at least a part of the oral appliance; vibratory means adapted to vibrate at least a part of the oral appliance; and impulse means adapted to apply an impulsive force to at least a part of the oral appliance. Relatively simple and/or widely available configurations may therefore be employed by embodiments, thus supporting cost-effective implementation of the proposed concept(s).

In an embodiment, the processor arrangement may be configured to: compare the measured mechanical response with a predetermined threshold value; and determine a fit value based on the comparison result. This may enable relatively simple determination of the fit value, thus reducing complexity and/or cost of embodiments.

By way of example, it may be preferable for the determined fit value to comprise one of a plurality of classification values. Embodiments may therefore support classification of the fit value into easily understandable categories that may enable improved understanding by a user.

Some embodiments may further comprise an analysis unit configured to determine usage information based on the determined fit value, the aligner usage information describing at least one of: past usage of the oral appliance; and a recommendation for future usage of the oral appliance. Embodiments may therefore support the provision of information which helps to guide oral care/treatment decisions.

By way of example, the mechanical stimulus may comprise at least one of: a vibratory force applied to the oral appliance for causing at least part of the oral appliance to vibrate; and an impulsive force applied to the oral appliance for modifying the momentum of at least part of the oral appliance. For example, a vibratory electric toothbrush may be used to apply vibrations to the oral appliance. Embodiments may therefore support the use of pre-existing and widely available devices in order to provide the mechanical stimulus. That is, embodiments may leverage existing devices for a new purpose which supports implementation of the proposed concept(s). In this way, embodiments may be cheap and simple to implement.

A system may be remotely located from an oral appliance being worn by a subject. In this way, a user (such as a dental professional) may have an appropriately arranged system that can receive fit value information at a location remotely located from the system for assessing the fit of an oral appliance being worn by a subject. Embodiments may therefore enable a user to assess the fit of an oral appliance being worn by a subject using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further include: a server device comprising the system for assessing the fit of an oral appliance being worn by a subject; and a client device comprising a user-interface. Dedicated data processing means may therefore be employed for the purpose of assessing the fit of an oral appliance being worn by a subject, thus reducing processing requirements or capabilities of other components or devices of the system.

The system may further include a client device, wherein the client device comprises the processor arrangement and a display unit. In other words, a user (such as a dentist or wearer of the oral appliance) may have an appropriately arranged client device (such as a laptop, tablet computer, mobile phone, PDA, etc.) which processes received data in order to assess the fit of an oral appliance and generate a display control signal. Purely by way of example, embodiments may therefore provide a monitoring or observation system that enables monitoring of the fit of an oral appliance being worn by a subject from a single location, wherein communication between a subject and monitoring user (e.g. dentist or doctor) is provided and can have its functionality extended or modified according to proposed concepts, for example.

It will be understood that processing capabilities may therefore be distributed throughout the system in different ways according to predetermined constraints and/or availability of processing resources.

According to yet another aspect of the invention, there is provided an oral appliance comprising a system for assessing the fit of the oral appliance according to a proposed embodiment. For example, the oral appliance may comprise a mouthguard, a mouthpiece, a dental aligner, or an orthodontic appliance.

One or more proposed concept(s) may therefore be employed in a range of different oral appliances. Embodiments may therefore have wide application in the fields of oral health or dental care.

Embodiments may be employed in combination with conventional/existing oral appliances. In this way, embodiments may integrate into legacy devices/products so as to improve and/or extend their functionality and capabilities. An improved oral appliance may therefore be provided by proposed embodiments.

According to examples in accordance with another aspect of the invention, there is provided a method for assessing the fit of an oral appliance being worn by a subject, the method comprising:
measuring a mechanical response of the oral appliance to a mechanical stimulus; and
analyzing the measured mechanical response to determine a fit value describing the fit of the oral appliance to the subject.

According to another aspect, there is provided a computer program product for assessing the fit of an oral appliance being worn by a subject, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified schematic block diagram of a dental aligner according to a proposed embodiment;
Fig. 2 is a simplified schematic block diagram of a dental mouthpiece worn by a subject and contacted by a system for assessing the fit of the mouthpiece according to a proposed embodiment;
Figs. 3A-3C are graphs depicting simulated variation in displacement, maximum displacement and acceleration responsive to a small perturbation for various pre-load, Fo, values of an oral appliance;
Fig. 4 is a simplified flow diagram of a method for assessing the fit of an oral appliance being worn by a subject according to a proposed embodiment; and
Fig. 5 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

Implementations in accordance with the present disclosure relate to various schemes, solutions, concepts, designs, methods and systems pertaining to aiding assessment of the fit of an oral appliance to a subject (i.e. wearer). According to proposed concepts, a number of possible solutions may be implemented separately or jointly. That is, although these possible solutions may be described below separately, two or more of these possible solutions may be implemented in one combination or another.

The invention proposes concepts for aiding and/or improving the assessment of an oral appliance's fit. In particular, embodiments may provide a system, device and/or method which measures a mechanical response of the oral appliance to a mechanical stimulus applied to the oral appliance (when being worn be a subject, e.g. patient or user). The measured mechanical response is analyzed to determine a fit value describing the fit of the oral appliance to the subject. Put another way, it is proposed that a mechanical response of the oral appliance to a mechanical stimulus is indicative of the fit of the oral appliance to the subject.

Embodiments propose that a measured mechanical response of an oral appliance can be analyzed to determine a fit value describing the fit of the oral appliance to the subject wearing the oral appliance in their mouth. The mechanical response may be stimulated by a vibratory force or an impulse force (e.g. sudden strike/hit) applied to the oral appliance. Purely by way of example, mechanical stimulus may be applied to the oral appliance by user (e.g. by clamping their teeth), by a stimulation unit integrated into the oral appliance (e.g. a vibratory unit), and/or by a separate device (e.g. a vibratory electric toothbrush or dental drill).

The proposed concepts may, for example, be applied to dental aligners, mouthpiece-style toothbrushes, mouthguards, and orthodontic appliances. In other words, proposed concepts may be incorporated into a wide range of oral care/hygiene devices to provide improved assessment and understanding of their fit to a user. Proposed embodiments may therefore improve dental care/treatment by providing relevant and useful information that may be leveraged to make more informed care/treatment decisions.

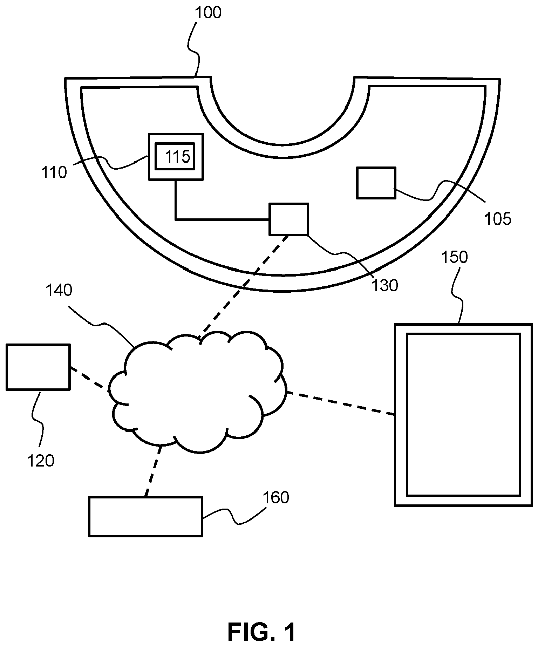

Referring to Fig. 1, there is shown a simplified schematic block diagram of a dental aligner 100 according to a proposed embodiment. The aligner 100 is adapted to be inserted into a user's mouth and worn for extended periods of time. The aligner is adapted such that, when worn, it applies a force to the wearer's teeth which cause one or more of the user's teeth to move over time (i.e. realign).

A system for assessing the fit of the dental aligner 100 is integrated with the dental aligner. Specifically, the dental aligner 100 comprises some components of the systems and these components are in communication with other system components (e.g. via short-range and/or long-range communication links).

The system comprises a stimulation unit 105 that is configured to generate and apply a mechanical stimulus to the dental aligner 100. In this embodiment, the stimulation unit is provided in the dental aligner 100 and comprises vibratory means (such as motor and offset pivot) that is adapted to vibrate the dental aligner 100. The vibratory means 105 thus generate and apply a vibratory force to the dental aligner 100 for causing at least part of the dental aligner 100 to vibrate. The mechanical stimulus thus comprises a vibratory force.

The system also comprises a sensor unit 110 that is configured to measure a mechanical response of the dental aligner to the mechanical stimulus (i.e. vibratory force) applied to the dental aligner 100. Specifically, the sensor unit 110 is integrated within the dental aligner 100 and comprises a movement sensor 115 that is configured to measure at least one of: an amplitude of acceleration; an amplitude of velocity; an amplitude of excursion; and a frequency of vibration of the dental aligner 100. The movement sensor 115 in this example comprises a piezo transducer circuit that is configured to convert a change of a parameter (e.g. momentum, acceleration, etc.) of the oral appliance to an electrical signal. Other types/forms of movement sensor, such as an accelerometer, gyroscope or IMU, may be employed in alternative implementations of the embodiment.

In the example of Fig. 1, the sensor unit 110 is further configured to detect application (i.e. onset) of mechanical stimulus to the dental aligner 100, Responsive to detecting application of mechanical stimulus to the dental aligner 100, the sensor unit 110 measures the mechanical response of the dental aligner to the detected mechanical stimulus. This may help to reduce power consumption and/or inaccurate measurements, e.g. by avoiding detection of incorrect/irrelevant measurements.

The system further comprises a processor arrangement 120 and a communication unit 130.

The communication unit 130 that is configured to communicate the measured mechanical response to the processor arrangement 120 via one or more communication links (i.e. a communication network). Specifically, the communication unit 130 comprises a wireless communication interface adapted to communicate the mechanical response to the Internet via a wireless connection. By way of example, the wireless connection may comprise a short-to-medium-range communication link. For the avoidance of doubt, short-to-medium-range communication link should be taken to mean a short-range or medium-range communication link having a range of up to around 100 meters. In short-range communication links designed for very short communication distances, signals typically travel from a few centimeters to several meters, whereas, in medium-range communication links designed for short to medium communication distances, signals typically travel up to 100 meters. Examples of short-range wireless communication links are ANT+, Bluetooth, Bluetooth low energy, IEEE 802.15.4, ISA100a, Infrared (IrDA), ISM Band, Near Field Communication (NFC), RFID, 6LoWPAN, UWB, Wireless HART, Wireless HD, Wireless USB, ZigBee. Examples of medium-range communication links include Wi-Fi, Z-Wave.

The processor arrangement 120 receives the communicated mechanical response from the Internet 140 via a wireless connection (that may comprise a short-to-medium-range communication link).

The processor arrangement 120 is configured to analyze the measured mechanical response (detected by the movement sensor 110) so as to determine a fit value describing the fit of the oral appliance to the subject. Specifically, the processor arrangement 120 is configured to compare the measured mechanical response with a predetermined threshold value; and determine a fit value based on the comparison result. For instance, the predetermined threshold value may be configured to distinguish between tight or loose fit of the dental aligner 100. Depending on the comparison result, it can then be determined which of two classification values (e.g. tight or loose, or correct or incorrect) the fit value is assigned.

Other pairs of classification values may be employed, such as correct and incorrect fit), and/or a set of possible classifications may comprise more than two classification values/fields. For example, a plurality of threshold values may be employed to distinguish between a range of fit values, thus enabling the mechanical response to be classified into one of a range of possible classification values (e.g. a scale of values ranging from 1 to 10).

The processor arrangement 120 is configured to communicate the determined fit value to a portable computing device 150 (such as a tablet computer, smartphone or laptop) via the Internet 140. In this way, information about the determined fit value may be provided to a user of the system and/or the wearer of the dental aligner.

The system of Fig. 1 also comprises an analysis unit 160 that can communicate with the processor arrangement 120 and the portable computing device 150 via the Internet 140.The analysis unit 160 is configured to obtain the determined fit value (e.g. from the processor arrangement 120 or the portable computing device 150) and to analyze the fit value to determine aligner usage information describing at least one of: past usage of the oral appliance; and a recommendation for future usage of the oral appliance. For instance, if the fit value is not as expected (according to predetermined predictions and/or calculations), the analysis unit 160 may infer that the dental aligner has not been used in accordance with instructions or guidance. This may facilitate the generation and provision of information to guide care/treatment decisions.

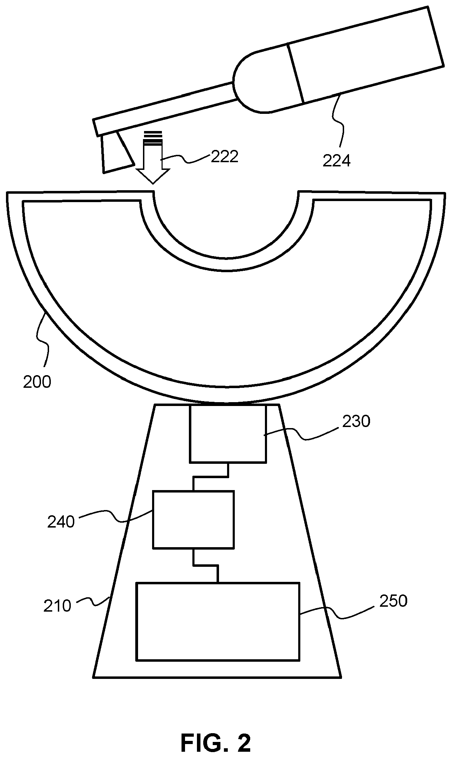

Referring now to Fig. 2, there is shown a simplified schematic block diagram of a dental mouthpiece 200 (e.g. gumshield or bruxism guard) being worn by a subject and being contacted by a system 210 for assessing the fit of the mouthpiece 200. For ease of illustration, the mouth of the subject is not shown in Fig. 2.

The mouthpiece 200 is inserted into a user's mouth and worn to protect the teeth and/or gums from damage. It is preferred that the mouthpiece 200 closely conforms to the shape of the subject's (i.e. wearer's) teeth and gums so as to minimize and gaps therebetween.

The system 210 for assessing the fit of the mouthpiece 200 comprises a separate, standalone hand-held system 210 that is configured to be placed against the mouthpiece during use.

According to the proposed concept, a mechanical stimulus is applied to the mouthpiece 200 and the system 210 is configured to analyze a measured mechanical response to the mechanical stimulus in order to determine a fit value describing the fit of the mouthpiece to the subject.

In the embodiment of Fig. 2, the mechanical stimulus is applied to the mouthpiece 200 by using a vibratory electric toothbrush 224 (as may already be owned and available to the wearer of the mouthpiece 200). As indicated by the arrow 222, a vibration electric toothbrush 224 is held or pushed against the mouthpiece so as to apply a vibratory force 222 to mouthpiece 200.

The system 210 comprises a sensor unit 230 that measures a mechanical response of the oral appliance to a mechanical stimulus (i.e. vibratory force 222) applied to the mouthpiece 200 by the electric toothbrush 224. A processor arrangement 240 of the system 210 analyzes the measured mechanical response to determine a fit value describing the fit of the mouthpiece to the subject. An output interface 250 of the system is configured to communicate information (e.g. provide an audible and/or visual indication) describing the determined fit value to the subject.

The output interface 250 may also perform additional function. For example, in the embodiment of Fig. 2, the output interface 250 is configured to output an instruction for prompting the subject to press/hold the vibrating electric toothbrush 224 against the mouthpiece. Based on analysis of the measured mechanical response, it may also be determined if the vibrating electric toothbrush 224 is being pressed against the mouthpiece 200 too firmly or too lightly. The output interface 240 may then also be employed to provide feedback/instructions to the subject, which may guide the subject to press more firmly/lightly for example. An instruction communicated by the output interface 250 may also comprise guidance instructing the subject to perform a predetermined jaw movement or pose, thus aiding more accurate measurement of the mechanical response of the mouthpiece 200.

From the above-described embodiments, it will be understood that one or more concept(s) for assessing the fit of an oral appliance are provided. Such assessment may be achieved remotely, and in an objective, non-obtrusive manner. Embodiments may also facility the provision of objective recommendation(s), such as advice to change the oral appliance.

In particular, it is proposed that a force between the oral appliance and the wearer's teeth/gums may be leveraged as an indicator or measure of fit (e.g. tighter fit=higher force). In particular, the force will influence the mechanical response of the oral appliance to a mechanical stimulus. By measuring and analyzing the mechanical response to a stimulus, (change in) aligner fit may be assessed.

An arrangement of one or more components for applying the mechanical stimulus and/or measuring the mechanical response may be provided in (i.e. integrate within) the oral appliance, or provided externally to the oral appliance.

By way of further summary of the proposed concept(s), an exemplary embodiment may comprise the following:
a means for measuring the response of an oral appliance to a mechanical stimulus, e.g. an accelerometer or IMU;
means for providing a mechanical stimulus to the oral appliance, or, alternatively, means to detect whether a stimulus is provided or to indicate to a user to provide a stimulus (e.g. a biting motion);
a processor arrangement for calculating a measure of the fit from the measured response; and
means to provide information to the user and/or a dental professional, based on the determined fit, e.g. notification to change the oral appliance, information on the level of wearing compliance, etc.

Further embodiments will now be described by way of further explanation of the proposed concept(s) and various implementation options.
- Exemplary Embodiment A - Stimulus-response measurement using an electric toothbrush that induces vibrations to the oral appliance picks-up resonance forces or acceleration by a sensor arrangement in the electric toothbrush.

In this embodiment, the oral appliance may not comprise any additional elements related to providing a stimulus and measuring the response of the oral appliance. Instead, an external device/system may be used to determine the mechanical response of the oral appliance. In particular, a powered toothbrush may be held against the oral appliance, either with the bristles or back of the brush head. The vibration of the power toothbrush then provides the stimulus to the oral appliance, and the response can be measured via the brush head platen of the powered toothbrush.

Powered toothbrushes that can measure platen reaction force (patterns) exerted by the moving tooth onto the platen of a brush head are already known. Simulations have demonstrated that an acceleration amplitude ≥0.01g is measurable with existing IMU sensors present in such toothbrushes (with a minimum resolution of ≈0.0003g).

Additional data averaging and filtering techniques (e.g. moving average, high/low bandpass, baseline subtraction etc.) may be used to resolve the aligner-movement-related acceleration from the general toothbrush acceleration.

Exemplary Embodiment B - Stimulus-Response Measurement within the Oral Appliance.

In this embodiment, a sensor arrangement is incorporated into the oral appliance for stimulus-response measurements. Data containing the sensed stimulus-response measurements may be communicated to a device for analysis via a wireless communication link. That is, the oral appliance comprises a sensor for measuring the mechanical response (e.g. an accelerometer) as well as an actuator (e.g. an electrodynamic oscillator or piezoelectric actuator) for providing a defined mechanical stimulus. Alternatively, actuation and measurement may be provided by a single element, such as a piezoelectric transducer. Here, providing stimulus and response measurement can be at one or several (different) locations on the aligner. The response measurement data is then sent wirelessly to a receiver, such as a smartphone or laptop computer.

Alternatively, response measurements may be temporarily stored in a memory of the oral appliance and read out later using a type of docking station provided with the oral appliance. The docking station can also serve to charge a power source of the oral appliance that is required for the actuator and sensor. The docking station may be connected to a smartphone and/or a cloud sever over the internet.

Analysis of the response measurement is undertaken a processor arrangement (in smartphone, docking station, or cloud server). This may provide a measure of the oral appliance fit, or alternatively a measure of the change in fit over time. Based on this assessment, a notification may be provided to the wearer of the oral appliance and/or a dental professional that the oral appliance should be altered or changed. Also, compliance of wearing the oral appliance may be monitored by regularly performing a response measurement. When the oral appliance is not worn, the response will be significantly different from what is expected when it is worn.

Exemplary Embodiment C - User-Induced Stimulus and Response Measurement using Sensor in the Oral Appliance.

In this embodiment, the oral appliance may only comprise a sensor unit for measuring mechanical response to a mechanical stimulus (such as an accelerometer). Rather than employing an actuator, the mechanical stimulus may be provided by the wearer of the oral appliance, for instance in the form of chewing motion/jaw movement or teeth chattering. These 'stimulus events' can be randomly occurring / unsolicited, or explicitly asked for via a UI presented to the user. In the latter case the stimulus may also be the user tapping against the aligner. Although these stimuli may not be as controllable/standardized as when provided via an actuator, they may still be sufficient for reliably determining the mechanical response of the oral appliance. This is because the stimulus motions may be fairly reproducible and, moreover, are typically 'impulse stimuli' (i.e. a short, sudden force). This latter implies that some response features such as resonance frequency and decay time/damping can reproducibly be determined.

Exemplary Embodiment D - Oral Appliance Design for Tight or Loose Fit Indication

In another embodiment, the oral appliance may be designed such that the change in mechanical response is detectable or greatly enhanced when it transitions from a tight fit to a loose fit.

For example: the back face of a dental aligner may be curved outward, i.e. away the tooth. Similarly, for the target tooth/teeth, a gap between the back face of the aligner and the tooth may be increased. These would ensure that the back face of the aligner disengages with the tooth for loose fitting conditions, thereby giving a clearly distinguishable mechanical response.

Other aligner properties may also be varied locally (such as thickness of aligner back face, among others) to provide a changing mechanical response to stimulus as the aligner fit changes.

To demonstrate the principle of the proposed concept(s), a minimum model of the tooth-aligner system has been considered. Here, only the interaction of an oral appliance segment with a single tooth, which is attached to gums, is modelled. To mimic the connection of the segment to the rest of the oral appliance, the side faces are fixed. Additionally, the force that the oral appliance imposes on the tooth is modelled as a uniformly distributed load on its, initially flat, front face.

At each point in time, the aligner segment imposes a preload, Fo, on the tooth surface. To assess the mechanical response (here displacement or acceleration), an oscillating probe pulse, probe(t), is applied with a force magnitude, f₀«F₀. Thus, here, the response of the aligner front face is measured with respect to a small perturbation. The model uses order of magnitude dimensions and properties of real oral appliance-tooth systems to show feasibility of the concept.

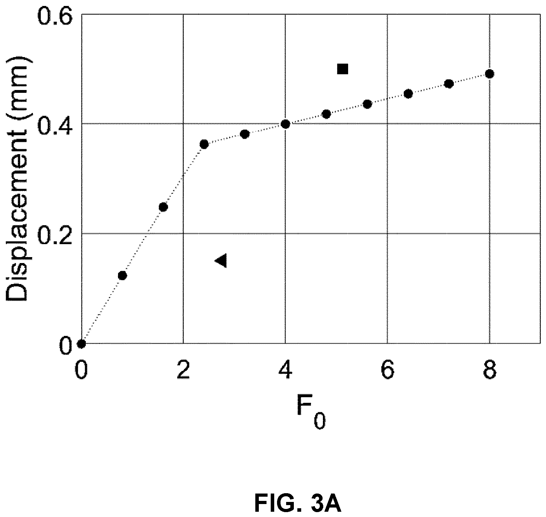

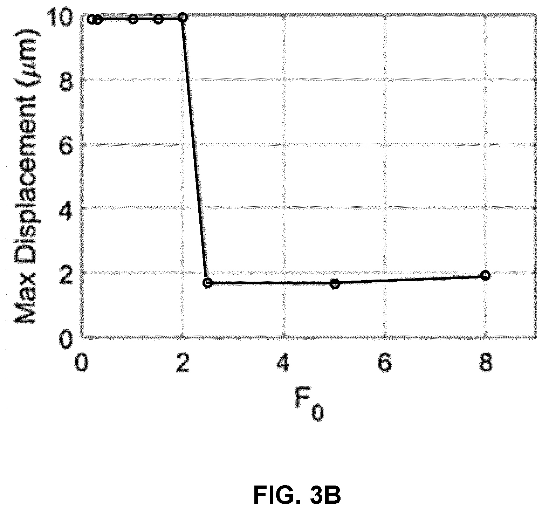

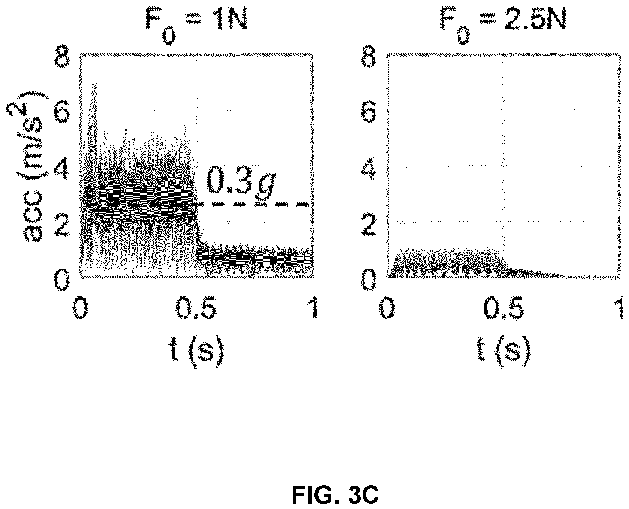

In line with the above, a set of computational simulations were performed to:
(i) Measure the response to static load (F₀) - Fig. 3A shows displacement and stresses on the aligner geometry for different F₀ values. The measured static displacement of the tooth center of mass (tooth activation) is shown.
(ii) For some of the static loadings, time-dependent simulations were done to measure corresponding vibration response of the front face of the aligner. Fig. 3B shows the resulting amplitude of displacement of vibration for different pre-loads. The sharp change in amplitude of displacement at ≈2N is due to a loss in contact (disengagement) of the tooth-gum-aligner front face, with the back face of the aligner. Fig. 3C shows variation in acceleration of the aligner front-face over time for two different static loads, F₀ = 1N (i.e. loose fit) and F₀ = 2.5N (i.e. tight fit), wherein the probe ON time was 0.5 seconds. For a probe frequency of 100Hz (~265Hz frequency of powered toothbrush), mean aligner acceleration is ≈ 0.03g for a tight fit (F₀ = 2.5N) and ≈ 0.3g for a loose fit (F₀ = 1N). Thus, it is seen that, with decreasing static load, the mean aligner acceleration transitions from a low displacement/acceleration system to one with a higher value.

Thus, it has been demonstrated from the simulations that variation in displacement responsive to a perturbation enables a preload, Fo, and thus fit of the oral appliance to be inferred. Similar inference can be made from variations in acceleration responsive to perturbations.

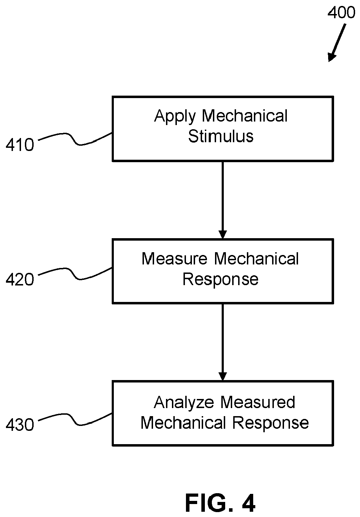

Referring to Fig. 4, there is depicted a flow diagram of a method 400 for assessing the fit of an oral appliance being worn by a subject. The method begins with step 410 of applying a mechanical stimulus to the oral appliance. The applied stimulus may be vibratory (i.e. exhibit a vibration cycle) or may comprise an impulse (i.e. a sudden force of short duration).

Next, in step 420, a mechanical response of the oral appliance to a mechanical stimulus is measured (using one or more sensors).

Finally, the measured mechanical response is analyzed in step 430 to determine a fit value describing the fit of the oral appliance to the subject.

From the above description of various concepts and embodiments, it will be appreciated that there is proposed a concept of assessing fit of an oral appliance worn by a subject. The proposed concept is based on a realization that the fit of an oral appliance with the teeth and/or gums of a wearer will influence a mechanical response of the oral appliance to a mechanical stimulus. It is proposed that, by analysis of such a mechanical response, the fit of an oral appliance may be determined. This may provide for an objective and accurate measure of fit.

Such proposals may thus facilitate simple and reliable assessment of the fit of an oral appliance worn by a subject.

By way of example only, illustrative embodiments may be utilized in many different types of clinical, medical or subject-related environments, such as a hospital, doctor's office, ward, care home, person's home, etc.

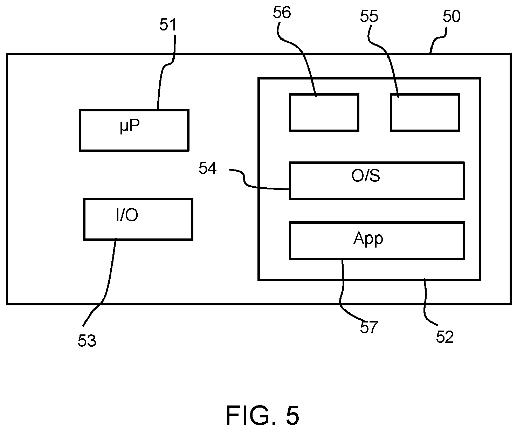

Fig. 5 illustrates an example of a computer 50 within which one or more parts of an embodiment may be employed. Various operations discussed above may utilize the capabilities of the computer 50. For example, one or more parts of a system for providing an assessment of oral appliance fit may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 50 includes, but is not limited to, PCs, workstations, laptops, PDAs, palm devices, smartphones, smartwatches, servers, storages, and the like. Generally, in terms of hardware architecture, the computer 500 may include one or more processors 51, memory 52, and one or more I/O devices 53 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 51 is a hardware device for executing software that can be stored in the memory 52. The processor 51 can be virtually any custom made or commercially available processor, a central processing unit (CPU), a digital signal processor (DSP), or an auxiliary processor among several processors associated with the computer 50, and the processor 51 may be a semiconductor-based microprocessor (in the form of a microchip) or a microprocessor.

The memory 52 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 52 may incorporate electronic, magnetic, optical, and/or other types of storage media. Note that the memory 52 can have a distributed architecture, where various components are situated remote from one another, but can be accessed by the processor 51.

The software in the memory 52 may include one or more separate programs, each of which comprises an ordered listing of executable instructions for implementing logical functions. The software in the memory 52 includes a suitable operating system (O/S) 54, compiler 56, source code 55, and one or more applications 57 in accordance with exemplary embodiments. As illustrated, the application 57 comprises numerous functional components for implementing the features and operations of the exemplary embodiments. The application 57 of the computer 50 may represent various applications, computational units, logic, functional units, processes, operations, virtual entities, and/or modules in accordance with exemplary embodiments, but the application 57 is not meant to be a limitation.

The operating system 54 controls the execution of other computer programs, and provides scheduling, input-output control, file and data management, memory management, and communication control and related services. It is contemplated by the inventors that the application 57 for implementing exemplary embodiments may be applicable on all commercially available operating systems.

Application 57 may be a source program, executable program (object code), script, or any other entity comprising a set of instructions to be performed. When a source program, then the program is usually translated via a compiler (such as the compiler 56), assembler, interpreter, or the like, which may or may not be included within the memory 52, so as to operate properly in connection with the O/S 54. Furthermore, the application 57 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, NET, and the like.

The I/O devices 53 may include input devices such as, for example but not limited to, a mouse, keyboard, scanner, microphone, camera, etc. Furthermore, the I/O devices 53 may also include output devices, for example but not limited to a printer, display, etc. Finally, the I/O devices 53 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 53 also include components for communicating over various networks, such as the Internet or intranet.

If the computer 50 is a PC, workstation, intelligent device or the like, the software in the memory 52 may further include a basic input output system (BIOS) (omitted for simplicity). The BIOS is a set of essential software routines that initialize and test hardware at startup, start the O/S 54, and support the transfer of data among the hardware devices. The BIOS is stored in some type of read-only-memory, such as ROM, PROM, EPROM, EEPROM or the like, so that the BIOS can be executed when the computer 800 is activated.

When the computer 50 is in operation, the processor 51 is configured to execute software stored within the memory 52, to communicate data to and from the memory 52, and to generally control operations of the computer 50 pursuant to the software. The application 57 and the O/S 54 are read, in whole or in part, by the processor 51, perhaps buffered within the processor 51, and then executed.

When the application 57 is implemented in software it should be noted that the application 57 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 57 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed concept(s) may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1 and 2 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A system for assessing the fit of an oral appliance (100) being worn by a subject, the system comprising:
a sensor unit (110) configured to measure a mechanical response of the oral appliance to a mechanical stimulus applied to the oral appliance; and
a processor arrangement (120) configured to analyze the measured mechanical response to determine a fit value describing the fit of the oral appliance to the subject.

2. The system of claim 1, wherein the sensor unit comprises:
a movement sensor (115) configured to measure at least one of: an amplitude of acceleration; an amplitude of velocity; an amplitude of excursion; and a frequency of vibration an amplitude and a frequency of at least one portion of the oral appliance.

3. The system of claim 1 or 2, wherein the sensor unit comprises:
At least one of: an accelerometer; a gyroscope; an inertial measurement unit IMU; and piezo transducer circuit configured to convert a change of a parameter of at least one portion of the oral appliance to an electrical signal,
And wherein the processor arrangement is configured to convert the electrical into a fit value.

4. The system of any of claims 1 to 3, wherein the oral appliance (100) comprises the sensor unit (110),
and optionally wherein: the oral appliance is remotely located from the processor arrangement (120); and the system further comprises a communication unit (130) configured to communicate the measured mechanical response to the processor arrangement.

5. The system of any of claims 1 to 4, wherein the sensor unit (110) is further configured to detect application of mechanical stimulus to the oral appliance (100), and wherein responsive to detecting application of mechanical stimulus to the oral appliance the sensor unit is configured to measure the mechanical response of the oral appliance to the detected mechanical stimulus.

6. The system of any of claims 1 to 5, further comprising:
an output interface (150) configured to output an instruction for prompting the subject to provide the mechanical stimulus to the oral appliance,
and preferably wherein the instruction comprises guidance instructing the subject to perform a predetermined jaw movement or pose.

7. The system of any of claims 1 to 6, wherein the system further comprises:
a stimulation unit (105) configured to generate and apply the mechanical stimulus to the oral appliance.

8. The system of claim 7, wherein the stimulation unit (105) comprises at least one of:
a piezoelectric transducer adapted to apply a force to at least a part of the oral appliance;
vibratory means adapted to vibrate at least a part of the oral appliance; and
impulse means adapted to apply an impulsive force to at least a part of the oral appliance.

9. The system of any of claims 1 to 8, wherein the processor arrangement (120) is configured to:
compare the measured mechanical response with a predetermined threshold value; and
determine a fit value based on the comparison result.

10. The system of any of claims 1 to 9, wherein the processor arrangement (12) is configured to compare the measured mechanical response with a one or more thresholds and to determine a fit value based on the comparison result(s), preferably wherein the determined fit value comprises one of a plurality of classification values.

11. The system of any of claims 1 to 10, further comprising:
an analysis unit (160) configured to determine usage information based on the determined fit value, the usage information describing at least one of: past usage of the oral appliance; and a recommendation for future usage of the oral appliance

12. The system of any of claims 1 to 11, wherein the mechanical stimulus comprises at least one of:
a vibratory force (222) applied to the oral appliance for causing at least part of the oral appliance to vibrate; and
an impulsive force applied to the oral appliance for modifying the momentum of at least part of the oral appliance.

13. An oral appliance comprising a system for assessing the fit of the oral appliance being worn by a subject according to any of claims 1 to 12.

14. A method (400) for assessing the fit of an oral appliance being worn by a subject, the method comprising:
measuring (420) a mechanical response of the oral appliance to a mechanical stimulus; and
analysing (430) the measured mechanical response to determine a fit value describing the fit of the oral appliance to the subject.

15. A computer program comprising computer program code means adapted, when said computer program is run on a computer, to implement the method of claim 14.
